(19)

Europäisches
Patentamt
European
Patent Office
Office européen
des brevets

(11)     **EP 3 495 904 A1**

(12)                    **EUROPEAN PATENT APPLICATION**

(43) Date of publication:
    **12.06.2019  Bulletin 2019/24**

(51) Int Cl.:
    **G05B 19/418** $^{(2006.01)}$     **B22F 3/105** $^{(2006.01)}$

(21) Application number: **17205907.3**

(22) Date of filing: **07.12.2017**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **MA MD TN**

(71) Applicant: **Siemens Aktiengesellschaft
    80333 München (DE)**

(72) Inventors:
    • **Balanica, Victor
      85049 Ingolstadt (DE)**
    • **Buggenthin, Felix
      81373 München (DE)**
    • **Caelers, Michael
      602 47 Norrköping (SE)**

    • **Düll, Siegmund
      80336 München (DE)**
    • **Eriksson, Jonas
      61294 Finspong (SE)**
    • **Fornander, Jerry
      61232 Finspang (SE)**
    • **Graichen, Andreas
      60214 Norrköping (SE)**
    • **Joblin, Mitchell
      81549 München (DE)**
    • **Otte, Clemens
      81739 München (DE)**
    • **Reitinger, Axel
      81377 München (DE)**
    • **Sidenvall, Vincent
      612 37 Finspang (SE)**
    • **Silfverdal, Martina
      705 95 Örebro (SE)**

(54)    **METHOD AND APPARATUS FOR PREDICTING MANUFACTURING PARAMETERS OF A
        PRODUCT TO BE MANUFACTURED IN A 3D-PRINTING PROCESS**

(57)    The invention relates to a method for predicting manufacturing parameters of a product (30) to be manufactured in a 3D-printing process having specified material properties, comprising the steps of:
- storing construction data of previously manufactured products and manufacturing parameters related to the previously manufactured products in a database (10);
- storing testing data of the previously manufactured products in the database (10), the testing data representing at least one material property of the previously manufactured products;
- correlating the testing data of the previously manufactured products with the construction data and the manufacturing parameters with a machine learning method;
- determining setup parameters for the product (30) to be manufactured based on desired material properties by feeding the trained machine learning method with the desired material properties which returns manufacturing parameters of the product to be manufactured.

FIG 1

## Description

The invention relates to a method for manufacturing parameters of a product to be manufactured in a 3D-printing process having specified material properties. The present invention further relates to a 3D-printing device.

Although applicable in principle to any 3D-printing device, the present invention and its underlying problem will be hereinafter described in combination with a laser powdered bed fusion printing device.

Laser powdered bed fusion (LPS) enables the manufacturing of metal parts by a laser-wise selective melting of metal powder which is also commonly known as 3D-printing. In order to correctly print a product, a complex parametrization and configuration has to be carried out. For example, the position of the product on a base plate, the orientation and the relative position of the product to further parts may have impact to the result of a print job. A design engineer may optimize the mentioned properties together with multiple further parameters of a print job based on his experience. However, even experienced engineers usually have to perform several test prints in order to optimize the result. This generates additional costs and occupies the printing device that otherwise might be used productively.

The optimization of the properties of a product to be printed is made based on material properties which are determined in lab tests. With lab tests, for example, tensile strength (stress-strain curves) and low-cycle fatigue is evaluated. The tests often use standardized test bars which are printed at different positions of a base plate and with varying manufacturing parameters. Sometimes, material testing is also done on real (commercial) products which are often more challenging to print due to issues resulting from a more complex shape of the product.

The analysis of the test results is a manual process. Transferring the gained insights into the design and the setup of the 3D-printing device is based on the experience of the design engineer.

The problem addressed by the present invention is to provide a simplified and more reliable process for determining optimized manufacturing parameters, in particular with regard to desired material properties of a product to be manufactured, for setting up a 3D-printing device.

The present invention solves this problem with a method for predicting manufacturing parameters of a product to be manufactured in a 3D-printing process having specified material proper-ties according to the features of claim 1, an apparatus for predicting manufacturing parameters of a product to be manufactured in a 3D-printing process having specified material properties according to the features of claim 8 and a 3D-printing device with the features of claim 13. Preferred embodiments are subject of the dependent claims.

In a first aspect, a method for predicting manufacturing parameters of a product to be manufactured in a 3D-printing process having specified material properties is provided. The method comprises a step of storing construction data of previously manufactured products and manufacturing parameters related to the previously manufactured products in a database. The method further comprises the step of storing testing data of the previously manufactured products in the database, the testing data representing at least one material property of the previously manufactured products. The method further comprises a step of correlating the testing data of the previously manufactured products with the construction data and the manufacturing parameters with a machine learning method. The method further comprises a step of determining setup parameters for the product to be manufactured based on desired material properties by feeding the trained machine learning method with the desired material properties which returns manufacturing parameters of the products to be manufactured.

In a second aspect, an apparatus for predicting manufacturing parameters of a product to be manufactured in a 3D-printing process having specified material properties is provided, the apparatus comprising a database, a data correlator and an optimizer. The database is adapted to store construction data of previously manufactured products and manufacturing parameters related to the previously manufactured products in conjunction with related testing data of the previously manufactured products, the testing data representing at least one material property of the previously manufactured products. The data correlator is adapted to correlate the testing data of the previously manufactured products with the construction data and a manufacturing parameter with a machine learning method. The optimizer is adapted to determine setup parameters for the product to be manufactured based on desired material properties by retrieving, from the database, manufacturing parameters of the product to be manufactured.

The present invention takes into account that the determination of appropriate manufacturing parameters for printing a product with a 3D-printing device is a challenging task. Usually, an engineer is required to perform multiple test printing tasks for achieving an optimal result. This increases the costs for printing the product, and the 3D-printing device is occupied for a long-time period due to the multiple test printings. Additionally, even subtle variations in individual characteristics of printing devices of the same type can lead to different material properties of the printed parts, causing unwanted variations in part quality and life-time, for example, due to different low-cycle fatigue behaviors.

Accordingly, the present invention aims to understand and control these effects for printing a 3-dimensional (3D) product. In particular, the present invention aims to provide an automated process for determining improved parameters for printing a 3-dimensional product and therefore, the invention can provide an improved process for predicting material properties of a product to be manufactured in a 3D-printing process and for setting-up the 3D-printing device and achieving optimized results when printing a 3-dimensional product.

It is for this purpose that the knowledge about previous printing processes, comprising construction data and manufacturing parameters together with related testing data, is collected in a database. This collected knowledge is correlated with each other by a machine learning method and can be taken into account when predicting material properties for printing a new 3-dimensional product. The data stored in such a database may be considered as a knowledge database which is used as training data to train a machine learning method for shortening a feedback cycle to a 3D-printing process, thereby accelerating the design of new and improved components, increasing component quality while lowering cost and increasing component performances. In this way, by specifying desired material properties, the determination of parameters for setting-up the 3D-printing device can be automated without the need of the experience of a highly qualified engineer, and especially without the need of a further number of test printings for an appropriate result. Hence, the time and costs which are needed for printing a 3-dimensional product with a desired quality can be minimized. Furthermore, the quality of the printed product by the 3-dimensional printing process can be improved.

The construction data may be any kind of data which are appropriate for specifying the product to be manufactured. For example, the construction data may comprise data of a computer-added design (CAD) system. However, it is understood that any other kind of data for specifying the properties of the product to be manufactured may be possible, too.

The determination of setup parameters for setting-up the 3D-printing device based on manufacturing parameters which have been returned from the machine learning method on feeding it with desired material properties may use, for example, corresponding setup parameters of a previously produced product. Accordingly, the same setup parameters may be applied for producing the new product. However, it may be also possible to use the manufacturing parameters returned form the machine learning method which may correspond to those manufacturing parameters of the previously produced product and to optionally adapt these parameters depending on the properties of the product which is to be produced. The adaption of the parameters may be made by the machine learning method or a design engineer after having received a suggestion from the machine learning method.

According to a preferred embodiment, the step of correlating the testing data comprises correlating the testing data additionally with sensor data acquired during manufacturing of the previously manufactured products. The sensor data acquired during manufacturing can be stored in the database as well. Together with a construction data and a manufacturing parameter the sensor data are used as input data for the machine learning method. In this way, the process for predicting manufacturing parameters of a product to be manufactured having desired material properties can be improved with respect to the prediction quality.

According to a further improved embodiment, the step of correlating the testing data is conducted by a neural network, a support vector machine, a Gaussian process, a random forest or a linear model. Each of the mentioned machine learning methods is suitable for returning manufacturing parameters of a product to be manufactured and having desired material properties. Which of the machine learning methods is used to train the stored data depends on the result to be achieved.

According to a further preferred embodiment, the manufacturing parameters comprise setup parameters of the 3D-printing device, an orientation of the product in the 3D-printing device, a laser path, a laser power, an inert gas flow, ambient conditions during manufacturing, slicing, support structures or parameters of the 3D-printer. Accordingly, a comprehensive knowledge database used to train the machine learning method may be obtained. In this way, it may be possible to consider not only parameters for setting-up the 3D-printing device, but also further information, in particular information about the material properties which can be achieved when applying the respective setup of the printing device. Accordingly, it is possible to obtain a forecast of the expected result when printing a product based on the setup parameter being determined from the machine learning method using training data acquired in the past.

According to a further preferred embodiment, the manufacturing parameters comprise material parameters of the product to be manufactured comprising at least one of: a specification of raw materials, powder properties, material properties or parameters specifying a result of the manufactured product.

In a further preferred embodiment, the step of determining testing data comprises acquiring mechanical microstructure data and/or material structure data, in particular tensile strength or low-cycle fatigue.

The parameters mentioned above describe a high-dimensional vector, whose data will be used as input data and correlated with the testing data and will be used to train the machine learning method.

According to a further preferred embodiment, the step of controlling the 3D-printing device may be based on the determined setup parameters.

According to a further preferred embodiment of the apparatus, the database for storing the construction data, the manufacturing parameters and the testing data may be a database of a product life-time management system.

According to a further preferred embodiment of the apparatus, a first data acquisition sensor unit may be adapted to acquire sensor data during manufacturing of the previously manufactured products. The first data acquisition sensor unit may comprise one or a plurality of different sensors. The first data acquisition sensor unit may comprise, e.g. an optical tomograph generating images of different layers which can be combined to a 3D-model. The first data acquisition unit may also comprise a meltpool sensor which monitors the melting point of the material melt by a laser of the 3D-printing device. In particular, a meltpool sensor is adapted to measure temperatures during the manufacturing process by means of spectroscopy. The sensor data acquired by the first data acquisition unit is stored in the database and associated to the data of the manufactured product.

According to a further preferred embodiment, the apparatus may further comprise a second data acquisition sensor unit adapted to acquire mechanical microstructure data and/or material structure data, in particular tensile strength or low-cycle fatigue. The second data acquisition sensor unit may consist one sensor or a plurality of different sensors. In particular, the second data acquisition sensor unit is adapted to determine the structure of the material during a test after a product has been manufactured by the 3D-printing device. The data acquired by the second data acquisition unit is stored in the database and associated with the product which has been manufactured by the 3D-printing device.

According to a further preferred embodiment of the apparatus, the apparatus comprises a controller for controlling the 3D-printing device based on the determined setup parameter. Having such a controller, a fully automated printing of the 3-dimensional object based on optimized setup parameters is possible.

As a third aspect, a 3D-printing device comprising an apparatus as described herein is provided. In particular, the 3D-printing device is a laser powder bed fusion 3D-printing device. Such a printing device generates 3-dimensional products by a laser beam which is melting metal powder. Such 3D-printing devices usually require a very complicated setup of all required parameters. Accordingly, the automated determination of appropriate setup parameters enables to speed-up and to improve the 3-dimensional process of such printers.

For a better understanding of the present invention and advantageous thereof, reference is now made to the following description taken in conjunction with the accompanying drawings. The invention is explained in more detail below using exemplary embodiments which are specified in the schematic figures of the drawings in which:

Fig. 1    shows a block diagram of an embodiment of a 3D-printing device comprising an apparatus for controlling the 3D-printing device according to the present invention; and

Fig. 2    shows a flow diagram of an embodiment of a method for controlling a 3D-printing device according to the present invention.

The appended drawings are intended for providing further understanding of the embodiments of the invention. The illustrated embodiments, in conjunction with the description, help to explain principles and concepts of the invention. Other embodiments and advantages mentioned become apparent in view of the drawings.

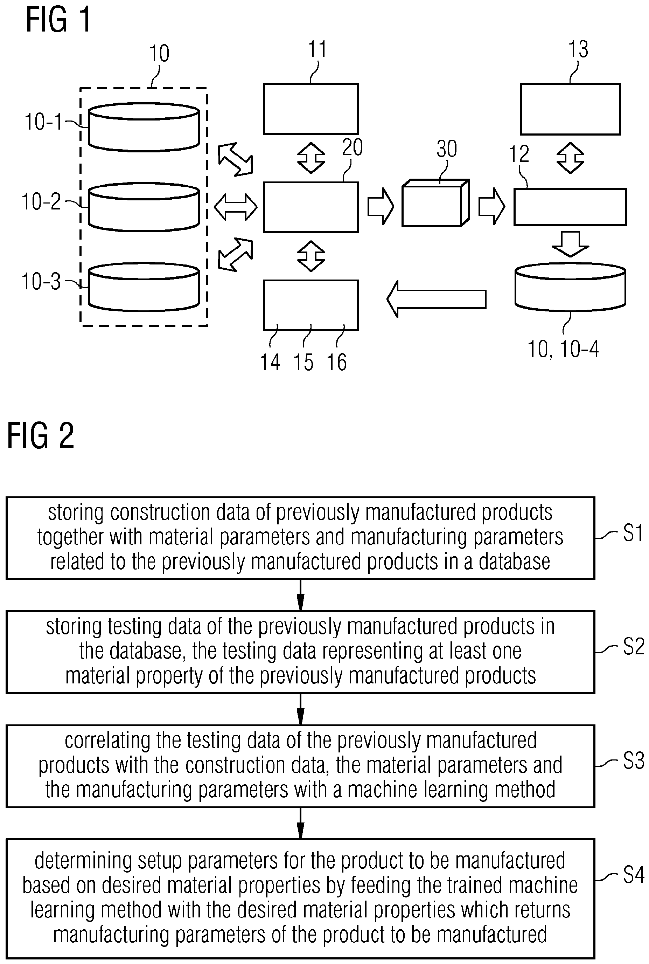

Fig. 1 shows a block diagram of an embodiment of a 3D-printing device according to the invention. The 3D-printing device comprises a 3D-printer 20. For example, the 3D-printer 20 may be a laser powdered bed fusion (LPS) printer which enables manufacturing of metal parts by laser-wise selective melting of metal powder. However, it is to be understood that any other technique for 3-dimensional printing may be also applied. Especially, the 3D-printer 20 may be a printer applying selective laser sintering, electron beam melting, electron beam additive manufacturing, fused filament fabrication, fused deposition modeling, stereo lithography, multi jet modelling or film transfer imaging. Furthermore, any other appropriate technique for performing a 3-dimensional printing may be possible, too.

The 3D-printer 20 is controlled by a controller 16. The controller 16 may be a separate part or, as shown in Fig. 1, be employed in the 3D-printer 20 or in any other computing device. For example, the controller 16 may be employed as a processor which may receive construction data (i.e. manufacturing parameter) of a part to be printed. Based on the received construction data, for example 3D data, the controller 16 may generate signals for driving the respective components of the 3D-printer 20. Especially, the controller 16 may generate analogue or digital signals which may be applied to the 3D-printer 20 in order to move elements of the 3D-printer into a particular direction, to activate a print head, to control a laser beam or to perform any other desired operation of the 3D-printer 20.

For performing the desired 3-dimensional printing operation, the 3D-printer 20, and if necessary the controller 16, have to be provided with appropriate setup parameters in order to setup the 3D-printing device according to the desired printing job. Even though the present invention is not limited to LPS printing, the setup of the printing device will be explained in the following based on parameters for setting-up a LPS printer. However, it is to be understood that appropriate setup for a 3-dimensional printer applying another technique may be performed accordingly.

For example, it might be necessary to specify for a desired printing job of a LPS printer, to determine an appropriate metal powder which can be used for printing a desired part. Accordingly, an intensity of a laser beam which is used for the printing operation, a diameter of the laser beam, a pulse frequency of the laser pulses used for printing or any other parameters of the laser beam which may be setup accordingly can be specified. Further, the orientation of the part which shall be printed on the base plate may be determined. For example, the result of the printing operation may depend on a translational or rotatory orientation of the part on the printing plate. If more than one part shall be printed simultaneously, the position of the individual parts on the printing plate may also be specified. However, it is to be understood that the before-mentioned parameters shall be only some examples of setup parameters for the 3D-printing device and any further parameter for setting-up the printing device may be also specified.

In the following, the automated determination of setup parameters for the 3D-printing device by the apparatus for configuring the 3D-printing device according to desired material properties will be described. The apparatus for configuring the 3D-printing device comprises a database 10, first and second data acquisition sensor units 11, 13, a material testing unit 12, a data correlator 14 and an optimizer 15. The data correlator 14 and the optimizer 15 may be part of the processing unit which hosts the controller 16, as illustrated in Fig. 1.

The database 10 stores any kind of information related to previously printed parts. For this purpose, the database 10 may be any kind of appropriate data management system for collecting and storing data with previously printed parts. For example, the database 10 may be a database of a product life-time management (PLM) system. However, it is to be understood that the database 10 is not limited to such a PLM system. Moreover, any kind of database for storing the required information may be possible, too.

The parts which have been previously printed may be characterized in the database 10, for example, by respective construction data, material parameters and manufacturing parameters as well related testing data from manufactured parts. The respective data and parameters may be stored in different databases. By way of example only, Fig. 1 illustrates four different databases, namely a database 10-1 for construction data, a database 10-2 for material parameters, a database 10-3 for manufacturing parameters and a database 10-4 for testing data. The different databases can be physically separated databases or one combined database. For ease of explanation, hereinafter it is referred to one combined database.

For example, CAD data may be used for characterizing individual parts which have been previously manufactured. However, any other kind of information for characterizing the shape or particular functional properties of the products may also be possible. In particular, the previously printed parts may be characterized by a particular shape of the outer surface of particular functional properties. For example, each part may be characterized by its edges, corners, outer curves or any other particular characterizing feature. Furthermore, additional parameters relating to the part may be stored together with the above described characterizing properties, especially the construction data of the previously manufactured parts. The additional parameters may comprise, for example, the setup parameters which have been used for setting-up the 3D-printer 20 when printing the respective part 30. Accordingly, the manufacturing parameters may comprise some or all of the above described parameters or setting-up the 3D-printer 20.

Furthermore, any other kind of information related to the printing process may be stored in the database 10. For example, the part may be inspected by an appropriate measurement system which can be part of the first data acquisition unit 11, for determining at least some of the above mentioned specifications. For example, the part may be analyzed by a camera or a camera system, a laser scanner or any other test system for measuring the part during the printing job. However, it is understood that at least some of the features may be also determined by a manual or a semi-manual inspection of a part by a user. In particular, the first data acquisition unit 11 may comprise an optical tomography unit to generate a plurality of images of different layers which can be processed to generate a 3D-model of the printed product. By means of an optical tomography unit, deviations from the manufacturing data from the printed results may be found. The data acquisition unit 11 may further comprise a meltpool for observing, by means of spectroscopy, melting points of the selective melted metal powder. In addition, heat may be measured during selective melting of the metal powder. The acquired data may be stored in the database 10-3 for manufacturing parameters or one of the other databases 10-2 or 10-4.

Furthermore, any other kind of information related to the previously printed part is stored in the database 10. For example, it may be further stored in the database 10 any kind of information related to the result of the printing job when the previously printed part has been printed. This kind of information may be part of the testing data, stored in database 10-4. For example, this additional information may characterize the result of the printing operation when applying the respective setup parameters specified in the database 10. This information may comprise, for example, tolerances, i.e. deviations between the result of the printed product and the desired specification, strength or stability of the printed part, surface quality or surface texture of the printed part, weight of the part, time and/or costs for the printing part, or any other properties of the printed part. These features or at least some of these features may be determined after the printing of the part has been finished. Additional testing data may be collected by means of the second data acquisition unit 13, such as a mechanical microstructure of the printed product, and added to the database 10-4.

Therefore, the material testing unit 12 may be adapted to gather information about material properties of the printed product. In particular, stress-strain-curves and low-cycle fatigue behaviors may be determined by the material testing unit 12.

Furthermore, it may be also possible to acquire additional information of the previously printed part during the life-time of the part. Additionally, any further additional information related to the previously printed part may be added to the testing data database 10-4 at a later point of time. For example, a failure or abrasion of a part during a particular use of the part may be also reported to the database 10. Furthermore, it may be possible to specify in the database 10 the current use of the part, for example, at which position of a system the part is applied, whether or not the printed part is still in use, or any other information about the life-time or the end of the life-time of the previously printed part. However, it is to be understood that data stored in a database is not limited to the above described information.

Moreover, any other kind of information related to a previously printed part may also be collected in the database 10. This relates in particular to material parameters used to manufacture the previously printed part. Material parameters may be the metal used for printing the printed part, powder properties (such as diameter, amount of powder used to melt), powder composition and so on. In addition, material properties of the previous printed parts may be stored in a database 10-2 for material parameters.

In addition, manufacturing parameters relating to any process know-how may be stored in database 10-3. Manufacturing parameters, for example, relate to a position and/or rotation of the printed part on the base plate, a laser path, a laser power, an inert gas flow (e.g. argon gas flow) and ambient conditions during manufacturing. Manufacturing parameters may further comprise information about support structures for undercuts, the type of the 3D-printer 20, an individual information of the used 3D-printer 20 and so on.

The information related to previously printed part, which is stored in the database 10, may be provided to database 10 in any appropriate format and scheme. For example, a previously printed part may be automatically measured by an automated system and the acquired measurements may be provided to a database by an appropriate interface. If necessary, analogue measurements may be converted in digital data by means of an analogue to digital converter. Furthermore, manually or semi-manually acquired data may be also provided to the database 10 by an appropriate interface, for example, by a human to machine interface. The above mentioned information is collected and stored in the database 10 for any part 10 which has been printed and analyzed in the past, especially when different setup parameters to each of the printed parts have been applied.

The testing data stored in the database 10-4, in particular comprises material properties of a previously printed part.

The material properties, for example, with respect to mechanical strength, low-cycle fatigue, quality, life-time and so on can be used to control the setup parameters for printing a new product in a desired way.

To enable an automated printing of a new product with the 3D-printer 20 an engineer specifies the desired material properties of a product to be manufactured. The controller 16 will be able to process the aforementioned stored information in the database 10 to determine necessary manufacturing parameters such that the product to be manufactured reaches the desired material properties best possible.

Accordingly, the testing data stored in database 10-4 is analyzed by a machine learning method that correlates the testing data with the construction data and the manufacturing parameters stored in the databases 10-1, 10-2 and 10-3. After having trained the data with a machine learning method using the collected data which is stored in the database 10, the optimizer 15 uses the testing data stored in database 10-4 to optimize the manufacturing process to adjust the printer parameters in order to improve or achieve the desired material properties. The optimizer may also be used as a case-base-reasoning (CBR) system to support an engineer by recommending designs or parameters that suit required material properties. Such as CBR system, for example, can warn the engineer not to print beyond a specific height at certain positions on the base plate in order to ensure that the obtained material properties meet specified requirements.

Correlating the testing data with the construction data and the manufacturing parameters stored in the database 10 may be conducted by a neural network, a support vector machine, a Gaussian process, a random forest or a linear model. However, it is to be understood that any other suitable machine learning method may be used as well.

Formally, the procedure as described above may be solved in the following way: Let x be a parameter vector describing the printing process including construction data, material parameters and manufacturing parameters about the part in the print process. This information can be collected from the databases 10-, 10-2, 10-3. The parameter vector x usually is a high dimensional vector. Let y be a respective material property of the part to be manufactured as stored in the database 10-4. For simplicity, y may be a scalar in the following but can also be extended to a vector as well. The parameter x and the material property y of each previously printed part are associated to pairs (x, y) that are used to train a data-driven model, which learns the relation between x and y. By means of one of the aforementioned machine learning methods this relation may be learnt.

In the following, if an engineer chooses a certain value y* as desired material property and f is the learnt relation, then the system can propose a parameter vector x* whose associated material property is closest to the required one, according to:

$$x^* = \arg\min_x |f(x) - y^*|$$

This relation can be tackled by known automation methods. In a similar way, parameter vectors x can be identified that lead in general to improved material properties. This information can be used to adjust setting-up parameters of the design or the printer in the database 10.

With the present invention, machine learning methods are used to exploit multimodal data available from material tests. This allows shortening a feedback cycle to the printing process, accelerating the design of new and improved components, increasing component quality while lowering cost and increasing component performances.

Fig. 2 illustrates a flowchart of a method for controlling a 3D-printing device according to the present invention.

In step S1, construction data of previously manufactured products is stored together with material parameters and manufacturing parameters related to the previously manufactured products in a database. In step S2, testing data of the previously manufactured product is stored in the database, the testing data representing at least one material property of the previously manufactured products. In step S3, the testing data of the previously manufactured products is correlated with the construction data, the material parameters and the manufacturing parameters with a machine learning method. Finally, in step S4, setup parameters for the product to be manufactured are determined based on the desired material properties by feeding the trained machine learning method with the desired material properties which returns manufacturing parameters of the product to be manufactured.

Furthermore, it is to be understood that all the operations described above in connection with the apparatus of Fig. 1 for configuring the 3D-printing device may also be applied to this method.

**Claims**

1. A method for predicting manufacturing parameters of a product (30) to be manufactured in a 3D-printing process having specified material properties, comprising the steps of:

   - storing construction data of previously manufactured products and manufacturing parameters related to the previously manufactured products in a database (10);
   - storing testing data of the previously manufactured products in the database (10), the testing data representing at least one material property of the previously manufactured products;
   - correlating the testing data of the previously manufactured products with the construction data and the manufacturing parameters with a machine learning method;
   - determining setup parameters for the product (30) to be manufactured based on desired material properties by feeding the trained machine learning method with the desired material properties which returns manufacturing parameters of the product to be manufactured.

2. The method according to claim 1, wherein the step of correlating the testing data comprises correlating the testing data additionally with sensor data acquired during manufacturing of the previously manufactured products.

3. The method according to claim 1 or 2, wherein the step of correlating the testing data is conducted by a neural network, a support vector machine, a Gaussian process, a random forest or a linear model.

4. The method according to one of the preceding claims, wherein the manufacturing parameters comprise setup parameters of the 3D-printing device (20), an orientation of the product in the 3D-printing device (20), a laser path, a laser power, an inert gas flow, ambient conditions, slicing, support structures, parameters of the 3D-printer.

5. The method according to one of the preceding claims, wherein the manufacturing parameters comprise material parameters of the product to be manufactured comprising at least one of: a specification of raw materials, powder properties, material properties or parameters specifying a result of the manufactured product.

6. The method according to one of the preceding claims, wherein the step of determining testing data comprises acquiring mechanical microstructure data and/or material structure data, in particular tensile strength or low-cycle fatigue.

7. The method according to one of the preceding claims, wherein comprising the step of controlling the 3D-printing device (20) based on the determined setup parameters.

8. An apparatus for predicting manufacturing parameters of a product to be manufactured in a 3D-printing process having specified material properties, comprising:

   - a database (10) adapted to store construction data of previously manufactured products and manufacturing parameters related to the previously manufactured products in conjunction with related testing data of the previously manufactured products, the testing data representing at least one material property of the previously manufactured products;
   - a data correlator (14) adapted to correlate the testing data of the previously manufactured products with the construction data and the manufacturing parameters with a machine learning method;
- an optimizer (15) adapted to determine setup parameters for the product to be manufactured based on desired material properties by feeding the trained machine learning method with the desired material properties which returns manufacturing parameters of the product to be manufactured.

9. The apparatus according to claim 8, wherein the database (10) is a database of a product lifetime management system.

10. The apparatus according to claim 8 or 9, further comprising a first data acquisition sensor unit (11) adapted to acquire sensor data during manufacturing of the previously manufactured products.

11. The apparatus according to one of the preceding claims 8 to 10, further comprising a second data acquisition sensor unit (13) adapted to acquire mechanical microstructure data and/or material structure data, in particular tensile strength or low-cycle fatigue.

12. The apparatus according to one of the preceding claims 8 to 11, further comprising a controller (16) for controlling the 3D-printing device based on the determined setup parameter.

13. A 3D-printing device (20) comprising an apparatus according to one of claims 8 to 12.

14. The 3D-printing device according to claim 13, wherein the 3D-printing device (20) is a laser powder bed fusion 3D-printing device.

## FIG 1

## FIG 2

| | |
|---|---|
| storing construction data of previously manufactured products together with material parameters and manufacturing parameters related to the previously manufactured products in a database | S1 |
| storing testing data of the previously manufactured products in the database, the testing data representing at least one material property of the previously manufactured products | S2 |
| correlating the testing data of the previously manufactured products with the construction data, the material parameters and the manufacturing parameters with a machine learning method | S3 |
| determining setup parameters for the product to be manufactured based on desired material properties by feeding the trained machine learning method with the desired material properties which returns manufacturing parameters of the product to be manufactured | S4 |

Europäisches
Patentamt

European
Patent Office

Office européen
des brevets

# EUROPEAN SEARCH REPORT

**Application Number**

EP 17 20 5907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Han Chen: "Process parameters optimization for improving surface quality and manufacturing accuracy of binder jetting additive manufacturing process", Master of Engineering Thesis, 1 November 2015 (2015-11-01), pages 1-100, XP55482064, Montreal, Canada DOI: 10.1108/RPJ-11-2014-0149 Retrieved from the Internet: URL:http://digitool.library.mcgill.ca/webclient/StreamGate?folder_id=0&dvs=1528366615652~518 [retrieved on 2018-06-07] * page 8 * * page 12 - page 24 * * page 40 - page 44 * * page 67 - page 85 * ----- | 1-14 | INV. G05B19/418 B22F3/105 |
| X | BOILLAT E ET AL: "FINITE ELEMENT AND NEURAL NETWORK MODELS FOR PROCESS OPTIMISATION IN SELECTIVE LASER SINTERING", 20081231 , 31 December 2008 (2008-12-31), pages 1-16, XP002610276, Retrieved from the Internet: URL:http://citeseerx.ist.psu.edu/viewdoc/download?doi=10.1.1.133.9285&rep=rep1&type=pdf [retrieved on 2010-11-16] * the whole document * ----- | 1-14 | |

TECHNICAL FIELDS
SEARCHED (IPC)

B22F
G05B
B29C

-/--

The present search report has been drawn up for all claims

| Place of search | Date of completion of the search | Examiner |
|---|---|---|
| The Hague | 7 June 2018 | Abbing, Ralf |

Europäisches
Patentamt

European
Patent Office

Office européen
des brevets

**EUROPEAN SEARCH REPORT**

Application Number

EP 17 20 5907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2016 201289 A1 (SIEMENS AG [DE]) 3 August 2017 (2017-08-03) * abstract * * paragraph [0012] - paragraph [0037] * * paragraph [0063] * * paragraph [0069] - paragraph [0071] * ----- | 1-14 | |
| A | DE 102 41 746 A1 (HAAG GUENTER [DE]) 18 March 2004 (2004-03-18) * the whole document * ----- | 1-14 | |

TECHNICAL FIELDS
SEARCHED (IPC)

The present search report has been drawn up for all claims

| Place of search | Date of completion of the search | Examiner |
|---|---|---|
| The Hague | 7 June 2018 | Abbing, Ralf |

EPO FORM 1503 03.82 (P04C01)

## ANNEX TO THE EUROPEAN SEARCH REPORT
## ON EUROPEAN PATENT APPLICATION NO.

EP 17 20 5907

This annex lists the patent family members relating to the patent documents cited in  the above-mentioned European search report.
The members are as contained in the European Patent Office EDP file on
The European Patent Office is in no way liable for these particulars which are merely given for the purpose of information.

07-06-2018

| Patent document cited in search report | Publication date | Patent family member(s) | Publication date |
|---|---|---|---|
| DE 102016201289 A1 | 03-08-2017 | NONE | |
| DE 10241746 A1 | 18-03-2004 | NONE | |

EPO FORM P0459

For more details about this annex : see Official Journal of the European Patent Office, No. 12/82